# EUROPEAN PATENT SPECIFICATION

(11) **EP 3 128 365 B1**
(45) Date of publication and mention of the grant of the patent: **13.11.2019**
(21) Application number: 14786440.9
(22) Date of filing: 07.03.2014
(51) Int. Cl.: G03B 11/00, G03B 11/04, G03B 17/56

(54) **SLEEVE DIRECTION-TYPE WHITE BALANCE FILTER**
HÜLSENRICHTUNGSARTIGER WEISSABGLEICHSFILTER
FILTRE DE BALANCE DES BLANCS DU TYPE DIRECTIONNEL À MANCHON

(43) Date of publication of application: 08.02.2017
(73) Proprietor: Wu, Fu-Chi, Taipei City 11049 (TW)
(72) Inventor: Wu, Fu-Chi, Taipei City 11049 (TW)
(74) Representative: Cabinet Chaillot
(86) International application number: PCT/CN2014/000209
(87) International publication number: WO 2015/131301

(56) References cited:
- WO-A1-81/03385
- CA-A1- 2 645 132
- CN-A- 1 997 108
- CN-A- 102 375 298
- CN-U- 203 012 216
- CN-Y- 201 060 357
- JP-A- H07 107 495
- JP-A- S61 102 887
- KR-B1- 101 256 351

## Description

### BACKGROUND OF THE INVENTION

### 1. Field of the Invention:

The present invention relates to image pick-up technology, and more particularly, to a barrel-based white balance filter, which comprises an opaque barrel, and a white balance component axially adjustably mounted in the opaque barrel. The invention uses the opaque barrel to isolate the color temperature beyond the viewing scene, and allows adjustment of the proportion of the amount of the color temperature of the main light source using the light transmissive property of the white balance filter of the white balance unit, achieving the effect of increasing or reducing the average color temperature like the functioning of the eyelid to adjust the intraocular pressure subject to the brightness of the main light source so that the color is closer to the human eye visual sense and personal preferences.

### Description of the Related Art:

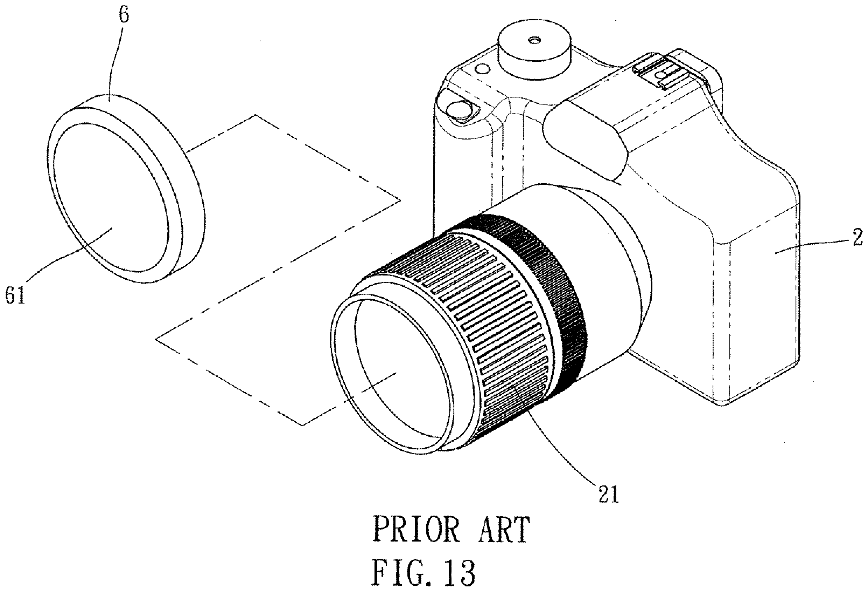

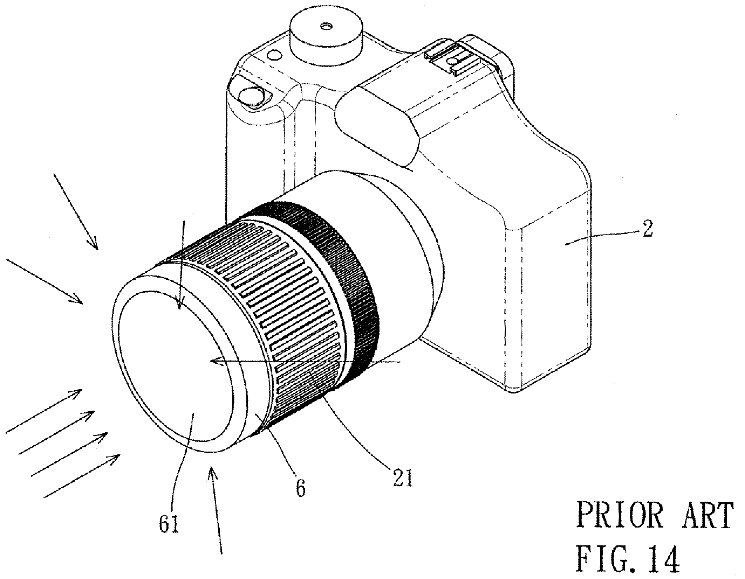

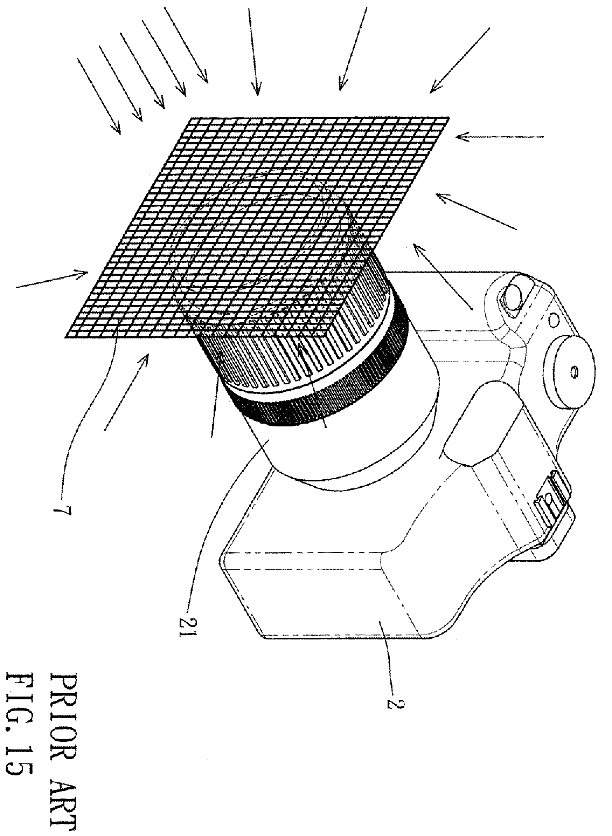

White balance filter plate (7) or white balance lens cap (6) with a filter (61) may be used with a camera (2). During application, as illustrated in FIGS. 13, 14 and 15, the white balance filter plate (7) or white balance lens cap (6) is attached to the camera lens (21) of the camera (2), and then the shutter is pressed to run the manual white balance mode, getting the average white balance value of the viewing scene. This average white balance value is used as a single color temperature for photographing.

Red, blue and green are three most basic colors that can be combined to make a useful range of colors. For human applications, these three primary colors are usually used, since human color vision is trichromatic. Only the values of these three primary colors are equal to each other, R = B = G, the correct white can be presented in the human vision. If white is accurately corrected or displayed, all other colors of photos or videos can be presented correctly in the human vision.

The manual white balance mode of a camera is to accurately measure the average color temperature of the viewing scene for use as a color temperature reference value so that accurate colors can be exhibited in the artworks, greatly reducing further software color temperature revising works. Because the colors of photos or videos having an incorrect color temperature are inconsistent with the scene of the photography site, the high-precision human visual system can easily senses the differences, all camera artworks in incorrect color are failed artworks to all people.

Each single picture of photos, videos, or live videos is presented in the human vision based on a single color temperature. The human vision can instantly senses any change or error of the color temperature. Therefore, getting the color temperature value of the scene is one of the most important works of the success of the artwork.

However, attaching a conventional white balance filter plate (7) or white balance lens cap (6) for a manual white balance operation cannot accurately get the color temperature and colors of the photography scene due to poor overall design of the white balance filter plate (7) or white balance lens cap (6). When facing the white balance filter plate (7) or white balance lens cap (6) toward the viewing scene, all the surrounding lights and colors non-selectively fall upon the filter to make an incorrect average color temperature value.

Actually, every color of a physical object has its particular color temperature value under every light source. When changing the shooting direction of the camera during photographing, the composition of the photograph range and color ratio are relatively changed, and the average color temperature value of each picture is also changed. So, only focus on the area of the scene to be photographed can get the most precise average white balance value.

In an outdoor operation, the scene taken by the camera (2) depends upon the view angle and distance of the focus of the camera lens (21). Photographing has its scene range. During application of the white balance filter plate (7) or white balance lens cap (6), unnecessary ambient light beyond the viewed range will be received, such as sunlight, reflected light from the blue sky and white clouds can fall upon the white balance filter plate (7) or white balance lens cap (6) to mix with the incident light from the viewing scene, causing the camera (2) to get an incorrect average color temperature value for photographing. Based on this incorrect average color temperature value, a color shift problem will occur in the photos or videos thus obtained.

During an indoor photography operation, all the outdoor or indoor main light source and other ambient and reflected light rays and colors from all directions will fall upon the white balance filter plate (7) or the filter (61) of the white balance lens cap (6) and enter the color temperature sensing range of the light transmissive structure thereof, giving an incorrect average white balance value to the manual white balance system, resulting in photo color distortion.

In addition to general photography purposes, getting the accurate colors of objects is also very important in scientific research, color management, typography or recording works, for example, to obtain a reference color of an object at different locations or under different light source environments for color calibration to achieve consistency.

JP S61102887 A and JP H07107495 A disclose a barrel-based white balance filter as defined in the preamble of claim 1.

### SUMMARY OF THE INVENTION

The present invention has been accomplished under the circumstances in view. It is therefore the main object of the present invention to provide a measure capable of getting the correct average white balance in a simple, rapid and low-cost manner. A barrel-based white balance filter of the present invention is as defined in claim 1, and comprises a white balance unit that comprises a barrel and a white balance component axially adjustably mounted in the barrel. The barrel is prepared from an opaque material and attachable to a camera lens of a camera directly or by means of an engagement thread thereof. The white balance component is a milky white or gray filter having a milky white or gray annular rim axially extended from the periphery thereof, and mounted in the barrel and axially movable relative to the barrel between an extended position and a fully received position. Thus, adjusting the position of the white balance component relative to the opaque barrel causes change in the received color light gradually. When the white balance component is moved to the position where the annular rim suspends outside the opaque barrel, the amount of ambient color light received by the milky white or gray filter is greatly increased, and the surrounding color light beyond the viewing scene that falls upon the annular rim is guided into the milky white or gray filter to regulate the color temperature value.

Further, when the white balance component is in the fully received position, the milky white or gray annular rim is completely received in the barrel and protected by the opaque barrel against the radiation of vivid light or reflected light during a manual white balance operation, enabling a manual white balance system of the camera using the barrel-based white balance filter to measure the average white balance value of the viewing scene accurately.

Further, by means of the high precision white balance filter, the barrel-based white balance filter of the present invention can accurately measure the color temperature value accurately from a far distance for adjusting the color balance and color density, achieving perfect color temperature setting in JPG or RAW files so that the user can instantly upload perfect color photos for sharing.

Further, the design of the barrel of the barrel-based white balance filter facilitates convenient use. When using the manual white balance mode, the barrel-based white balance filter can be directly attached to the camera lens, preventing intake of vivid light and color beyond the viewing range to affect color temperature measuring accuracy.

The present invention also relates to a detachable white balance color temperature measurement device as defined in independent claims 7 and 8.

### BRIEF DESCRIPTION OF THE DRAWINGS

FIG. 1 is an exploded view of a barrel-based white balance filter in accordance with a first embodiment of the present invention.
FIG. 2 illustrates the barrel-based white balance filter of the first embodiment of the present invention attached to the camera lens of a camera.
FIG. 3 is a schematic sectional applied view of the first embodiment of the present invention, illustrating the white balance filter adjusted relative to the opaque barrel.
FIG. 4 is an exploded view of an alternate form of the first embodiment of the present invention, illustrating the opaque barrel provided with an engagement thread for engagement with an engagement groove around the periphery of a front end of a camera lens of a camera.
FIG. 5 is a sectional installed view of an alternate form of the first embodiment of the present invention, illustrating the use of a flat glass type white balance filter.
FIG. 6 is a sectional installed view of a barrel-based white balance filter with a telescopic barrel in accordance with a second embodiment of the present invention.
FIG. 7 corresponds to FIG. 6, illustrating the telescopic barrel of the barrel-based white balance filter fastened to a camera lens of a camera.
FIG. 8 corresponds to FIG. 7, illustrating the telescopic barrel in the received status.
FIG. 9 is an elevational view of a barrel-based white balance filter fastened to a smart phone in accordance with a third embodiment of the present invention.
FIG. 10 illustrates the barrel-based white balance filter of the third embodiment of the present invention fastened to a tablet computer.
FIG. 11 illustrates a detachable type barrel-based white balance filter used in a camera in accordance with a fourth embodiment of the present invention.
FIG. 12 illustrates the detachable type barrel-based white balance filter of the fourth embodiment of the present invention equipped with a wireless circuit and a battery and mounted at a camera tripod for wireless communication with a camera or smart phone.
FIG. 13 illustrates a white balance device for use with a camera according to the prior art.
FIG. 14 corresponds to FIG. 13, illustrating the white balance device attached to the camera lens of the camera.
FIG. 15 illustrates the use of another prior art design of white balance device with a camera.

### DETAILED DESCRIPTION OF THE PREFERRED EMBODIMENT

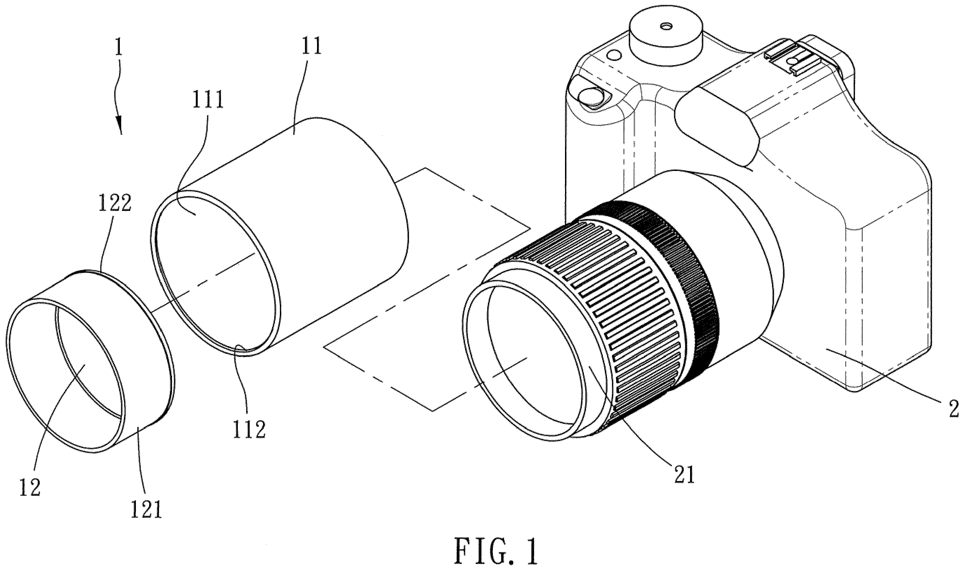

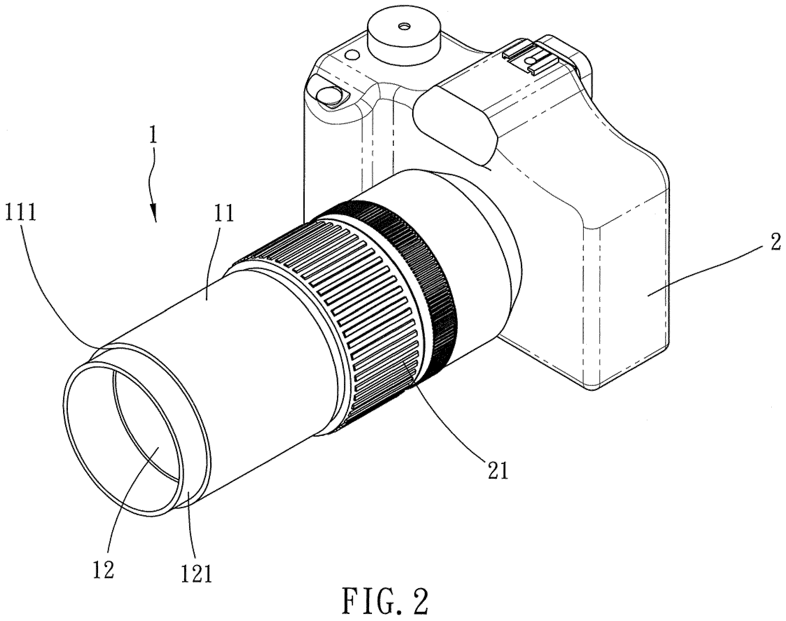

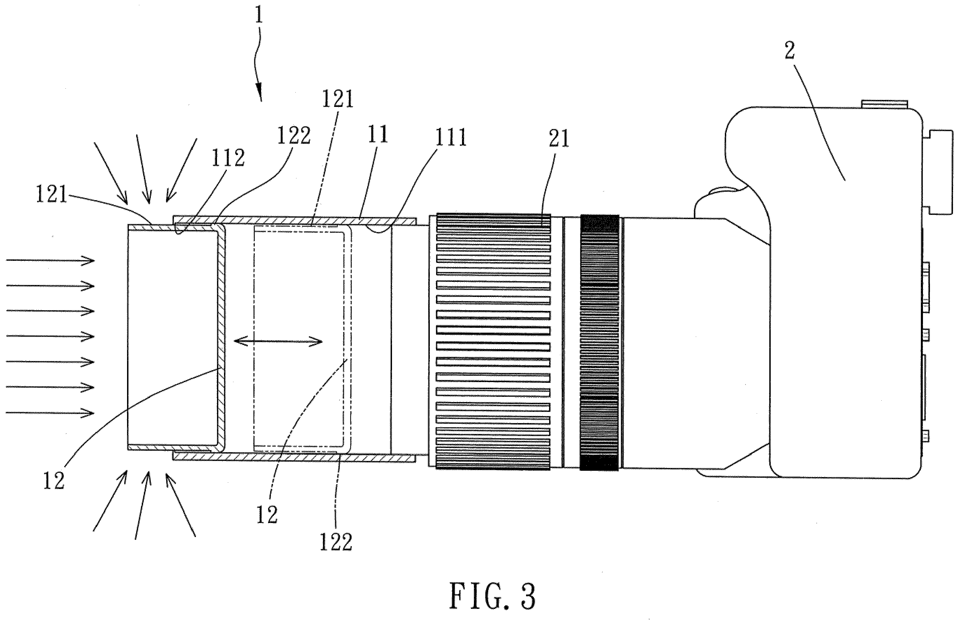

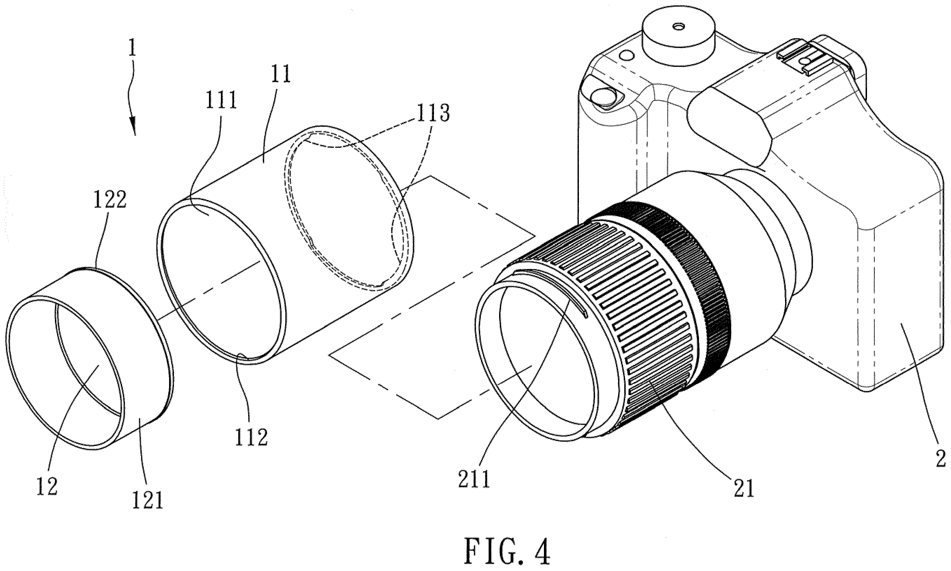

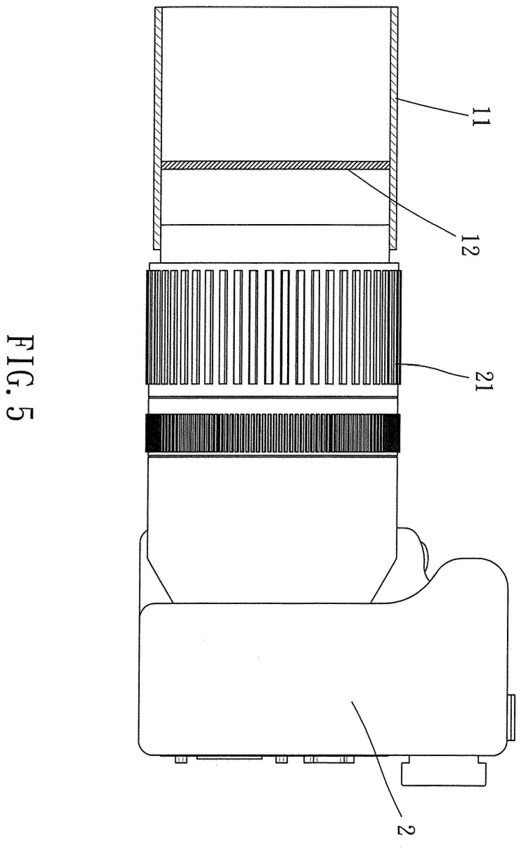

Referring to FIG. 1, 2 and 3, a barrel-based white balance filter in accordance with a first embodiment of the present invention is shown. The barrel-based white balance filter comprises a white balance unit (1) that comprises a barrel (11) and a white balance component axially adjustably mounted in the barrel (11). The barrel (11) is made from an opaque material, and configured to be directly pres-fitted onto the lens (21) of a camera (2). Alternatively, the barrel (11) can be configured to provide an engagement thread (113) for engagement with an engagement groove (211) around the periphery of the front end of the camera (2) (see FIG. 4). The white balance component is a milky white or gray filter (12) having an annular rim (121) axially extended from the periphery thereof and insertable into the bore (111) in the barrel (11) for allowing adjustment of the position of the milky white or gray filter (12) relative to the barrel (11) in axial direction. When pushed the milky white or gray filter (12) to the position where the annular rim (121) is completely received in the bore (111) of the barrel (11), the milky white or gray filter (12) is received in and shielded by the opaque barrel (11). Thus, during the operation of the camera (2) under the manual white balance mode, the milky white or gray filter (12) is well protective by the opaque barrel (11) against the radiation of vivid light or reflective light, and thus, the manual white balance system of the camera (2) can measure the average white balance value of the viewing area accurately. Further, the milky white or gray filter (12) can be configured having a six-star sword head protrusion at the center to assist focusing of the lens (21). Further, the closer the position of the milky white or gray filter (12) to the bore (111) of the barrel (11) is, the larger the amount of color light received will be. Adjusting the position of the milky white or gray filter (12) relative to the barrel (11) causes change in the received color light gradually. When the milky white or gray filter (12) is moved axially toward the outside of the bore (111) of the barrel (11) to have the annular rim (121) suspend outside the bore (111) of the barrel (11), the amount of ambient color light received by the milky white or gray filter (12) is greatly increased, and the surrounding color light beyond the scene of the viewing window that falls upon the annular rim (121) outside the bore (111) of the barrel (11) is guided into the milky white or gray filter (12) to regulate the color temperature value. Further, stop flanges (122)(112) are respectively provided at the rear side of the milky white or gray filter (12) and the orifice of the bore (111) of the barrel (11) for stopping against each other to prohibit the milky white or gray filter (12) from falling out of the barrel (11). Further, the milky white or gray filter (12) can be made a flat glass filter mounted in the bore (111) of the barrel (11) for receiving the color light of the scene viewed through the viewing window of the camera (2), obtaining an accurate average white balance value (see FIG. 5).

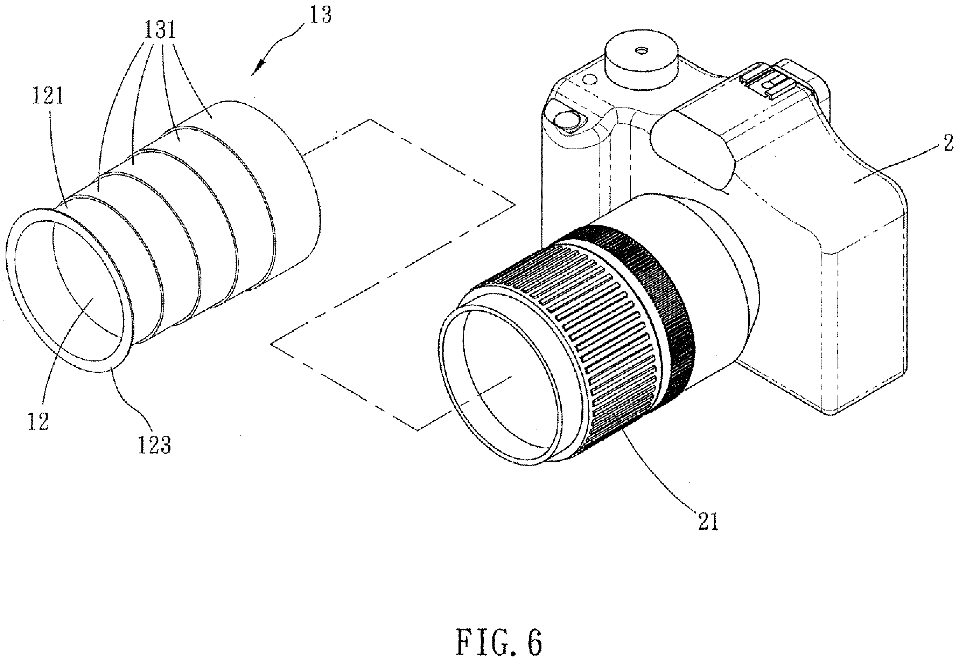

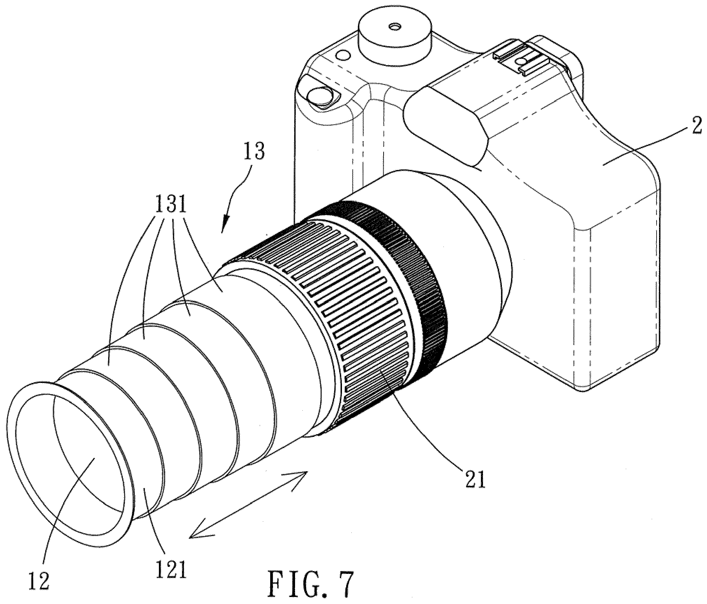

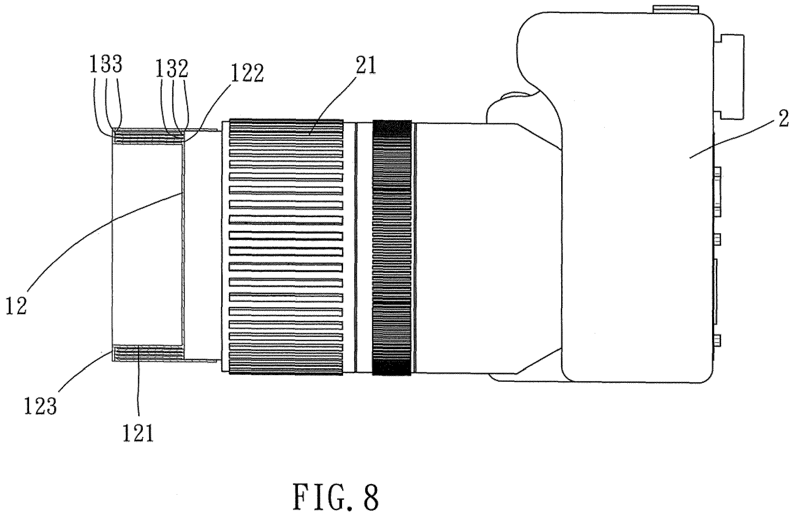

Referring to FIGS. 6, 7 and 8, a barrel-based white balance filter in accordance with a second embodiment of the present invention is shown. In this second embodiment, the barrel (13) is a telescopic design, comprising a plurality of barrel components (131) that slide one inside another. The milky white or gray filter (12) with the annular rim (121) is slidably coupled to the front side of the barrel (13). Thus, the barrel-based white balance filter can be adjusted axially to extend or shorten the length for carrying or storage conveniently. Further, stop flanges (132)(133)(122)(123) are respectively provided at opposing front and rear sides of each of the barrel components (131) and the milky white or gray filter (12) to prohibit the barrel components (131) and the milky white or gray filter (12) from disconnection.

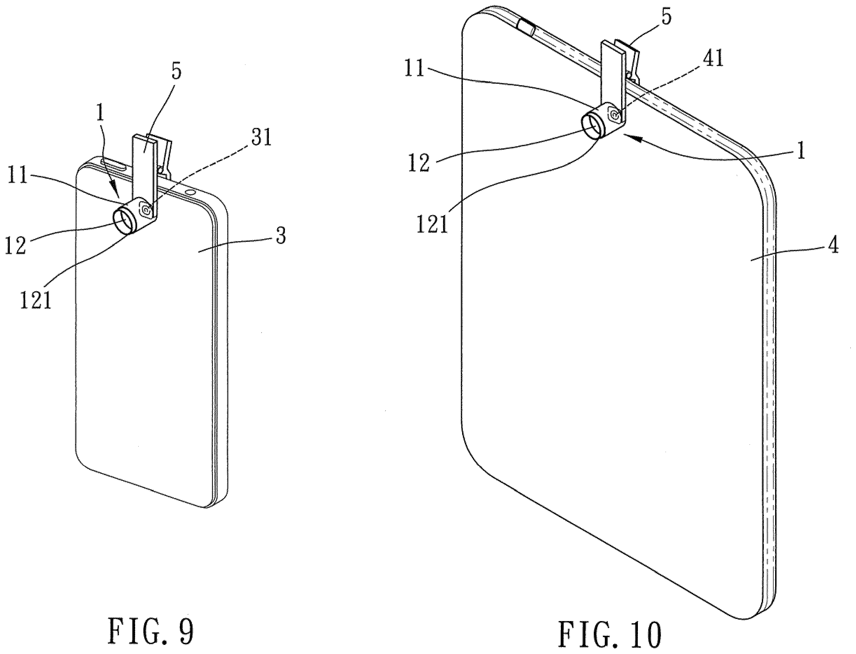

Referring to FIGS. 9 and 10, a barrel-based white balance filter in accordance with a third embodiment of the present invention is shown. The white balance unit (1) formed of the barrel (11) and the milky white or gray filter (12) having an annular rim (121) is mountable at the front side of a camera lens (31)(41) of a smart phone (3) or tablet computer (4). When using the smart phone (3) or table computer (4) to take pictures under the manual white balance mode, the milky white or gray filter (12) is well protected by the barrel (11) against the radiation of vivid light or reflective light, enabling the manual white balance system of the smart phone (3) or tablet computer (4) to measure the average white balance value of the scene viewed. Further, the barrel-based white balance filter of this third embodiment comprises a fastening device (5) for securing the barrel (11) of the white balance unit (1) to the front side of the camera lens (31)(41) of the smart phone (3) or tablet computer (4).

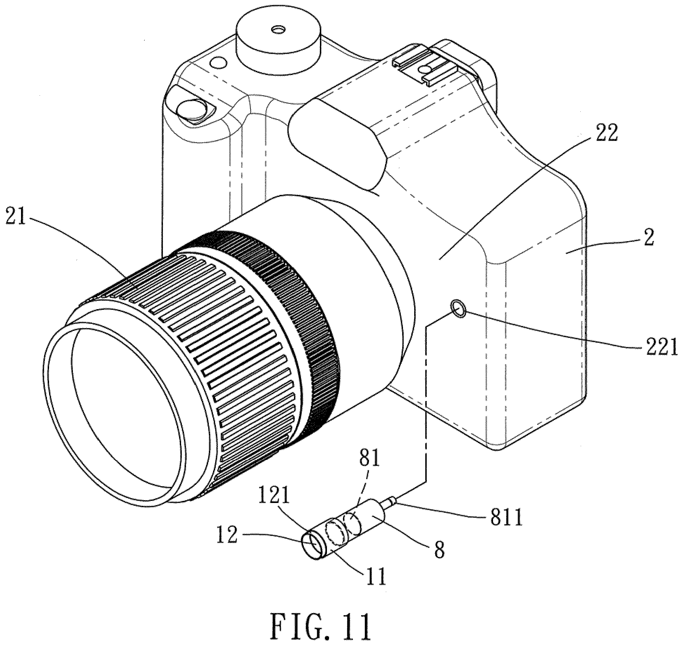

Referring to FIG. 11, a barrel-based white balance filter in accordance with a fourth embodiment of the present invention is shown. This fourth embodiment is used in a detachable white balance color temperature measurement device (8). The detachable white balance color temperature measurement device (8) comprises a color temperature sensor (81) mounted in an outer shell thereof, and a plug (811) disposed outside the outer shell for transmitting power supply and signals. The plug (811) can be plugged into a mating jack (221) at the camera body (22) or camera lens (21) of a camera (2), video camera, smart phone (3) or tablet computer (4). The white balance unit (1) formed of a barrel (11) and a milky white or gray filter (12) having an annular rim (121) is mounted in the front side of the detachable white balance color temperature measurement device (8). When using the camera (2), video camera, smart phone (3) or tablet computer (4) to take pictures under the manual white balance mode, the milky white or gray filter (12) is well protected by the barrel (11) against the radiation of vivid light or reflective light, and the color temperature sensor (81) senses the color temperature, enabling the manual white balance system of the camera (2), video camera, smart phone (3) or tablet computer (4) to measure the average white balance value of the scene viewed.

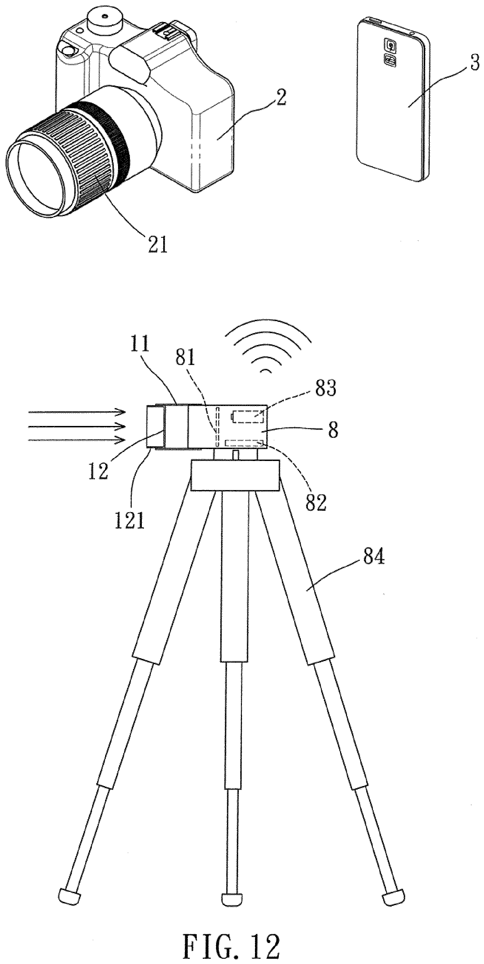

Further, a wireless circuit (82) and a battery (83) can be mounted in the detachable white balance color temperature measurement device (8). During application, the detachable white balance color temperature measurement device (8) is mounted on a tripod (84) for measuring the average white balance (color temperature) value of the scene and transmitting the measured average white balance (color temperature) value to a CPU (Central Processing Unit) of a camera (2), video camera, smart phone (3) or tablet computer (4) for processing through a white balance arithmetic process to get an accurate white valance (color temperature) value (see FIG. 12).

In conclusion, the invention provides a barrel-based white balance filter comprising a white balance unit that comprises an opaque barrel and a white balance component axially adjustably mounted in the opaque barrel. The invention uses the opaque barrel to isolate the color temperature beyond the camera scene, and allows adjustment of the proportion of the amount of the color temperature of the main light source using the light transmissive property of the white balance filter of the white balance unit, achieving the effect of increasing or reducing the average color temperature like the functioning of the eyelid to adjust the intraocular pressure subject to the brightness of the main light source so that the color is closer to the human eye visual sense and personal preferences.

Although particular embodiments of the invention have been described in detail for purposes of illustration, various modifications and enhancements may be made without departing from the scope of the invention which is defined by the claims. Accordingly, the invention is not to be limited except as by the appended claims.

## Claims

1. A barrel-based white balance filter, comprising a white balance unit (1), said white balance unit (1) comprising a barrel (11, 13) and a white balance component axially adjustably mounted in said barrel (11, 13), wherein:
said barrel (11, 13) is prepared from an opaque material and attachable to a camera lens (21) of a camera (2) directly or by means of an engagement thread (113) thereof;
the white balance component is a milky white or gray filter (12),
the barrel-based white balance filter being **characterised in that** the milky white or gray filter (12) has a milky white or gray annular rim (121) axially extended from the periphery thereof, and mounted in said barrel (11, 13) and axially movable relative to said barrel (11, 13) between an extended position and a fully received position, said milky white or gray annular rim (121) being completely received in said barrel (11, 13) and protected by said opaque barrel (11, 13) against the radiation of vivid light or reflected light during a manual white balance operation when said white balance component is in said fully received position, enabling a manual white balance system of the camera (2) using the barrel-based white balance filter to measure the average white balance value of the viewing scene accurately.

2. The barrel-based white balance filter as claimed in claim 1, wherein said milky white or gray filter (12) comprises a six-star sword head protrusion located at the center thereof to assist camera lens focusing.

3. The barrel-based white balance filter as claimed in claim 1, wherein said barrel (11) comprises a stop flange (112) located at an orifice thereof; said milky white or gray filter (12) comprises a stop flange (122) located at a rear side thereof stoppable against the stop flange (112) at the orifice of said barrel (11) to prohibit said milky white or gray filter (12) from falling out of said barrel (11).

4. The barrel-based white balance filter as claimed in claim 1, wherein said milky white or gray filter (12) is a flat glass filter mounted in said barrel (11, 13) for enabling said white balance component to measure the average white balance value of the color light within the viewing area.

5. The barrel-based white balance filter as claimed in claim 1, wherein:
said barrel (11, 13) is a telescopic barrel (13), comprising a plurality of barrel components (131) coupled to one another and axially slidable relative to one another; the milky white or gray filter (2) is axially slidably coupled to said telescopic barrel (13); said barrel components (131) and said milky white or gray filter (12) each comprise two stop flanges (122, 123, 132, 133) respectively located at opposing front and rear sides thereof and adapted to prohibit said barrel components (131) and said milky white or gray filter (12) from falling out of one another.

6. The barrel-based white balance filter as claimed in claim 1, wherein said white balance unit (1) further comprises a fastening device (5) for securing said barrel (11, 13) to a front side of a camera lens (21) of a camera (2), video camera, smart phone (3) or tablet computer (4) so that when the camera (2), video camera, smart phone (3) or tablet computer (4) runs a manual white balance mode, said milky white or gray annular rim (121) is protected by said opaque barrel (11, 13) against the radiation of vivid light or reflected light during a manual white balance operation, enabling a manual white balance system of the camera (2), video camera, smart phone (3) or tablet (4) to measure the average white balance value of the viewing scene accurately.

7. A detachable white balance color temperature measurement device (8), comprising a barrel-based white balance filter, an outer shell, a color temperature sensor (81) mounted in said outer shell, and a plug (811) electrically connected to said color temperature sensor (81) and extended out of said outer shell and electrically detachably connectable to a jack (221) at a camera body (22) or camera lens (21) of a camera (2), video camera, smart phone (3) or tablet computer (4) for transmitting power supply and signals,
wherein the barrel-white balance filter comprises a white balance unit (1), said white balance unit (1) comprising a barrel (11) and a white balance component axially adjustably mounted in said barrel (11), wherein said barrel (11) is prepared from an opaque material and held in said outer shell, and the white balance component is a milky white or gray filter (12),
the white balance color temperature measurement device (8) being **characterised in that** the milky white or gray filter (12) has a milky white or gray annular rim (121) axially extended from the periphery thereof, and mounted in said barrel (11) and axially movable relative to said barrel (11) between an extended position and a fully received position, so that when the camera (2), video camera, smart phone (3) or tablet computer (4) runs a manual white balance mode, said milky white or gray annular rim (121) is completely received in said opaque barrel (11) and protected by said opaque barrel (11) against the radiation of vivid light or reflected light during a manual white balance operation, enabling a manual white balance system of the camera (2), video camera, smart phone (3) or tablet (4) to measure the average white balance value of the viewing scene accurately.

8. A detachable white balance color temperature measurement device (8), comprising a barrel-based white balance filter, an outer shell, a color temperature sensor (81) mounted in said outer shell, a wireless circuit (82) and a battery (83) that are mounted in the white balance color temperature measurement device (8), which is mounted on a tripod (84), for measuring the average white balance value of the scene and transmitting the measured average white balance value to a CPU of a camera (2), video camera, smart phone (3) or tablet computer (4) for processing through a white balance arithmetic process,
wherein the barrel-based white balance filter comprises a white balance unit (1), said white balance unit (1) comprising a barrel (11) and a white balance component axially adjustably mounted in said barrel (11), wherein said barrel (11) is prepared from an opaque material and held in said outer shell, and the white balance component is a milky white or gray filter (12),
the white balance color temperature measurement device (8) being **characterised in that** the milky white or gray filter (12) has a milky white or gray annular rim (121) axially extended from the periphery thereof, and mounted in said barrel (11) and axially movable relative to said barrel (11) between an extended position and a fully received position, said milky white or gray annular rim (121) being completely received in said barrel (11) and protected by said opaque barrel (11) against the radiation of vivid light or reflected light when said white balance component is in said fully received position, enabling the CPU to get an accurate white balance value.

## Patentansprüche

1. Tubus-basiertes Weißabgleichfilter, das eine Weißabgleicheinheit (1) umfasst, wobei die Weißabgleicheinheit (1) einen Tubus (11, 13) und eine Weißabgleichkomponente umfasst, die im Tubus (11, 13) axial verstellbar montiert ist, wobei:
der Tubus (11, 13) aus einem lichtundurchlässigen Material hergestellt ist und an einer Kameralinse (21) einer Kamera (2) direkt oder mittels eines Eingriffsgewindes (113) davon angebracht werden kann;
die Weißabgleichkomponente ein Milchweiß- oder Graufilter (12) ist,
das Tubus-basierte Weißabgleichfilter **dadurch gekennzeichnet ist, dass** das Milchweiß- oder Graufilter (12) einen milchweißen oder grauen Ringkranz (121) aufweist, der sich axial vom Umfang davon erstreckt und im Tubus (11, 13) montiert ist und in Bezug auf den Tubus (11, 13) axial zwischen einer ausgefahrenen Stellung und einer vollständig eingefahrenen Stellung bewegt werden kann, wobei der milchweiße oder graue Ringkranz (121) vollständig im Tubus (11, 13) aufgenommen und durch den lichtundurchlässigen Tubus (11, 13) gegen Strahlung von hellem Licht oder reflektiertem Licht während eines manuellen Weißabgleichvorgangs geschützt wird, wenn die Weißabgleichkomponente in der vollständig eingefahrenen Stellung ist, wodurch ein manuelles Weißabgleichsystem der Kamera (2) zum genauen Messen des mittleren Weißabgleichwerts der Betrachtungsszene unter Verwendung des Tubus-basierten Weißabgleichfilters befähigt wird.

2. Tubus-basiertes Weißabgleichfilter nach Anspruch 1, wobei das Milchweiß- oder Graufilter (12) einen Sechssternschwertkopfvorsprung umfasst, der sich in der Mitte davon befindet, um Fokussierung der Kameralinse zu unterstützen.

3. Tubus-basiertes Weißabgleichfilter nach Anspruch 1, wobei der Tubus (11) einen Stoppflansch (112) umfasst, der sich an einer Öffnung davon befindet; das Milchweiß- oder Graufilter (12) einen Stoppflansch (122) umfasst, der an einer Rückseite davon stoppbar gegen den Stoppflansch (112) an der Öffnung des Tubus (11) angeordnet ist, um zu verhindern, dass das Milchweiß- oder Graufilter (12) aus dem Tubus (11) fällt.

4. Tubus-basiertes Weißabgleichfilter nach Anspruch 1, wobei das Milchweiß- oder Graufilter (12) ein Flachglasfilter ist, das im Tubus (11, 13) montiert ist, um die Weißabgleichkomponente zum Messen des mittleren Weißabgleichwerts des Farblichts innerhalb des Betrachtungsbereichs zu befähigen.

5. Tubus-basiertes Weißabgleichfilter nach Anspruch 1, wobei:
der Tubus (11, 13) ein teleskopischer Tubus (13) ist, der eine Mehrzahl von Tubuskomponenten (131) umfasst, die miteinander gekoppelt und axial in Bezug aufeinander verschiebbar sind; das Milchweiß- oder Graufilter (2) mit dem teleskopischen Tubus (13) axial verschiebbar gekoppelt ist; die Tubuskomponenten (131) und das Milchweiß- oder Graufilter (12) jeweils zwei Stoppflansche (122, 123, 132, 133) umfassen, die jeweils an gegenüberliegenden Vorder- und Rückseiten davon angeordnet und so ausgelegt sind, dass sie verhindern, dass die Tubuskomponenten (131) und das Milchweiß- oder Graufilter (12) auseinander fallen.

6. Tubus-basiertes Weißabgleichfilter nach Anspruch 1, wobei die Weißabgleicheinheit (1) ferner eine Befestigungsvorrichtung (5) zum Sichern des Tubus (11, 13) an einer Vorderseite einer Kameralinse (21) einer Kamera (2), einer Videokamera, eines Smartphones (3) oder eines Tabletcomputers (4) umfasst, so dass, wenn die Kamera (2), die Videokamera, das Smartphone (3) oder der Tabletcomputer (4) einen manuellen Weißabgleichvorgang ausführt, der milchweiße oder graue Ringkranz (121) durch den lichtundurchlässigen Tubus (11, 13) gegen Strahlung von hellem Licht oder reflektiertem Licht während eines manuellen Weißabgleichvorgangs geschützt wird, wodurch ein manuelles Weißabgleichsystem der Kamera (2), der Videokamera, des Smartphone (3) oder des Tabletcomputers (4) zum genauen Messen des mittleren Weißabgleichwerts der Betrachtungsszene befähigt wird.

7. Lösbare Weißabgleich-Farbtemperaturmessvorrichtung (8), die ein Tubus-basiertes Weißabgleichfilter, ein äußeres Gehäuse, einen Farbtemperatursensor (81), der im äußeren Gehäuse montiert ist, und einen Stecker (811) umfasst, der mit dem Farbtemperatursensor (81) elektrisch verbunden ist, sich aus dem äußeren Gehäuse erstreckt und elektrisch lösbar mit einer Buchse (221) an einem Kamerakörper (22) oder einer Kameralinse (21) einer Kamera (2), einer Videokamera, eines Smartphones (3) oder eines Tabletcomputers (4) zum Übertragen von Leistungszufuhr und Signalen verbunden werden kann,
wobei das Tubus-Weißabgleichfilter eine Weißabgleicheinheit (1) umfasst, die Weißabgleicheinheit (1) einen Tubus (11) und eine Weißabgleichkomponente umfasst, die im Tubus (11) axial verstellbar montiert ist, wobei der Tubus (11) aus einem lichtundurchlässigen Material hergestellt ist und im äußeren Gehäuse gehalten wird, und die Weißabgleichkomponente ein Milchweiß- oder Graufilter (12) ist,
die Weißabgleich-Farbtemperaturmessvorrichtung (8) **dadurch gekennzeichnet ist, dass** das Milchweiß- oder Graufilter (12) einen milchweißen oder grauen Ringkranz (121) aufweist, der sich axial vom Umfang davon erstreckt und im Tubus (11) montiert ist und in Bezug auf den Tubus (11) axial zwischen einer ausgefahrenen Stellung und einer vollständig eingefahrenen Stellung bewegt werden kann, so dass, wenn die Kamera (2), die Videokamera, das Smartphone (3) oder der Tabletcomputer (4) einen manuellen Weißabgleichvorgang ausführt, der milchweiße oder graue Ringkranz (121) vollständig im lichtundurchlässigen Tubus (11) aufgenommen und durch den lichtundurchlässigen Tubus (11) gegen die Strahlung von hellem Licht oder reflektiertem Licht während eines manuellen Weißabgleichvorgangs geschützt wird, wodurch ein manuelles Weißabgleichsystem der Kamera (2), der Videokamera, des Smartphones (3) oder des Tabletcomputers (4) zum genauen Messen des mittleren Weißabgleichwerts der Betrachtungsszene befähigt wird.

8. Lösbare Weißabgleich-Farbtemperaturmessvorrichtung (8), die ein Tubus-basiertes Weißabgleichfilter, ein äußeres Gehäuse, einen Farbtemperatursensor (81), der im äußeren Gehäuse montiert ist, eine Drahtlosschaltung (82) und eine Batterie (83) umfasst, die in der Weißabgleich-Farbtemperaturmessvorrichtung (8) montiert sind, die auf einem Stativ (84) montiert ist, um den mittleren Weißabgleichwert der Szene zu messen und den gemessenen Weißabgleichwert zur Verarbeitung durch einen arithmetischen Weißabgleichprozess an eine CPU einer Kamera (2), einer Videokamera, eines Smartphones (3) oder eines Tabletcomputers (4) zu übertragen,
wobei das Tubus-basierte Weißabgleichfilter eine Weißabgleicheinheit (1) umfasst, die Weißabgleicheinheit einen Tubus (11) und eine Weißabgleichkomponente umfasst, die im Tubus (11) axial verstellbar montiert ist, wobei der Tubus (11) aus einem lichtundurchlässigen Material hergestellt ist und im äußeren Gehäuse gehalten wird, und die Weißabgleichkomponente ein Milchweiß- oder Graufilter (12) ist,
die Weißabgleich-Farbtemperaturmessvorrichtung (8) **dadurch gekennzeichnet ist, dass** das Milchweiß- oder Graufilter (12) einen milchweißen oder grauen Ringkranz (121) aufweist, der sich axial vom Umfang davon erstreckt und im Tubus (11) montiert ist und in Bezug auf den Tubus (11) axial zwischen einer ausgefahrenen Stellung und einer vollständig eingefahrenen Stellung bewegt werden kann, wobei der milchweiße oder graue Ringkranz (121) vollständig im Tubus (11) aufgenommen und durch den lichtundurchlässigen Tubus (11) gegen Strahlung von hellem Licht oder reflektiertem Licht geschützt wird, wenn die Weißabgleichkomponente in der vollständig eingefahrenen Stellung ist, wodurch die CPU zum Erhalten eines genauen Weißabgleichwerts befähigt wird.

## Revendications

1. Filtre de balance des blancs de type à tube, comprenant une unité de balance des blancs (1), ladite unité de balance des blancs (1) comprenant un tube (11, 13) et un composant de balance des blancs monté de manière axialement ajustable dans ledit tube (11, 13), dans lequel :
ledit tube (11, 13) est préparé à partir d'un matériau opaque et est apte à être fixé à un objectif d'appareil photographique (31) d'un appareil photographique (2) directement ou au moyen d'un filetage d'engagement (113) de celui-ci ;
le composant de balance des blancs est un filtre de blanc laiteux ou gris (12),
le filtre de balance des blancs de type à tube étant **caractérisé par le fait que** le filtre de blanc laiteux ou gris (12) a un rebord annulaire blanc laiteux ou gris (121) s'étendant axialement à partir de la périphérie de celui-ci, et monté dans ledit tube (11, 13) et mobile axialement par rapport audit tube (11, 13) entre une position étendue et une position entièrement reçue, ledit rebord annulaire blanc laiteux ou gris (121) étant entièrement reçu dans ledit tube (11, 13) et protégé par ledit tube opaque (11, 13) vis-à-vis du rayonnement de lumière vive ou de lumière réfléchie pendant une opération de balance des blancs manuelle lorsque ledit composant de balance des blancs est dans ladite position entièrement reçue, permettant à un système de balance des blancs manuelle de l'appareil photographique (2), utilisant le filtre de balance des blancs de type à tube, de mesurer avec précision la valeur de balance des blancs moyenne de la scène de visualisation.

2. Filtre de balance des blancs de type à tube selon la revendication 1, dans lequel ledit filtre blanc laiteux ou gris (12) comprend une saillie en tête d'épée à six étoiles située au centre de celui-ci pour aider à la mise au point d'objectif d'appareil photographique.

3. Filtre de balance des blancs de type à tube selon la revendication 1, dans lequel ledit tube (11) comprend une bride d'arrêt (112) située au niveau d'un orifice de celui-ci ; ledit filtre blanc laiteux ou gris (12) comprend une bride d'arrêt (122) située sur un côté arrière de celui-ci apte à s'arrêter contre la bride d'arrêt (112) au niveau de l'orifice dudit tube (11) pour empêcher ledit filtre blanc laiteux ou gris (12) de tomber dudit tube (11).

4. Filtre de balance des blancs de type à tube selon la revendication 1, dans lequel ledit filtre blanc laiteux ou gris (12) est un filtre en verre plat monté dans ledit tube (11, 13) pour permettre audit composant de balance des blancs de mesurer la valeur de balance des blancs moyenne de la lumière colorée à l'intérieur de la zone de visualisation.

5. Filtre de balance des blancs de type à tube selon la revendication 1, dans lequel :
ledit tube (11, 13) est un tube télescopique (13), comprenant une pluralité de composants de tube (131) couplés les uns aux autres et aptes à coulisser axialement les uns par rapport aux autres ; le filtre blanc laiteux ou gris (2) est couplé de manière axialement coulissante audit tube télescopique (13) ; lesdits composants de tube (131) et ledit filtre blanc laiteux ou gris (12) comprennent chacun deux brides d'arrêt (122, 123, 132, 133) respectivement situées sur des côtés avant et arrière opposés de ceux-ci et adaptées pour empêcher lesdits composants de tube (131) et ledit filtre blanc laiteux ou gris (12) de tomber l'un de l'autre.

6. Filtre de balance des blancs de type à tube selon la revendication 1, dans lequel ladite unité de balance des blancs (1) comprend en outre un dispositif de fixation (5) pour fixer ledit tube (11, 13) à un côté avant d'un objectif (21) d'un appareil photographique (2), d'une caméra vidéo, d'un téléphone intelligent (3) ou d'une tablette électronique (4) de telle sorte que, lorsque l'appareil photographique (2), la caméra vidéo, le téléphone intelligent (3) ou la tablette électronique (4) fonctionne dans un mode de balance des blancs manuelle, ledit rebord annulaire blanc laiteux ou gris (121) est protégé par ledit tube opaque (11, 13) vis-à-vis du rayonnement de lumière vive ou de lumière réfléchie pendant une opération de balance des blancs manuelle, permettant à un système de balance des blancs manuelle de l'appareil photographique (2), de la caméra vidéo, du téléphone intelligent (3) ou de la tablette électronique (4) de mesurer avec précision la valeur de balance des blancs moyenne de la scène de visualisation.

7. Dispositif de mesure de température de couleur de balance des blancs détachable (8), comprenant un filtre de balance des blancs de type à tube, une enveloppe externe, un capteur de température de couleur (81) monté dans ladite enveloppe externe, et un connecteur (811) connecté électriquement audit capteur de température de couleur (81) et s'étendant hors de ladite enveloppe externe et apte à être connecté électriquement et de manière détachable à une prise (221) au niveau d'un corps d'appareil photographique (22) ou d'un objectif (21) d'un appareil photographique (2), d'une caméra vidéo, d'un téléphone intelligent (3) ou d'une tablette électronique (4) pour transmettre une alimentation électrique et des signaux,
le filtre de balance des blancs de type à tube comprenant une unité de balance des blancs (1), ladite unité de balance des blancs (1) comprenant un tube (11) et un composant de balance des blancs monté de manière axialement ajustable dans ledit tube (11), ledit tube (11) étant préparé à partir d'un matériau opaque et maintenu dans ladite enveloppe externe, et le composant de balance des blancs étant un filtre blanc laiteux ou gris (12),
le dispositif de mesure de température de couleur de balance des blancs (8) étant **caractérisé par le fait que** le filtre blanc laiteux ou gris (12) a un rebord annulaire blanc laiteux ou gris (121) s'étendant axialement à partir de la périphérie de celui-ci, et monté dans ledit tube (11) et mobile axialement par rapport audit tube (11) entre une position étendue et une position entièrement reçue de telle sorte que, lorsque l'appareil photographique (2), la caméra vidéo, le téléphone intelligent (3) ou la tablette électronique (4) fonctionne dans un mode de balance des blancs manuelle, ledit rebord annulaire blanc laiteux ou gris (121) est entièrement reçu dans ledit tube opaque (11) et protégé par ledit tube opaque (11) vis-à-vis du rayonnement de lumière vive ou de lumière réfléchie pendant une opération de balance des blancs manuelle, permettant à un système de balance des blancs manuelle de l'appareil photographique (2), de la caméra vidéo, du téléphone intelligent (3) ou de la tablette électronique (4) de mesurer avec précision la valeur de balance des blancs moyenne de la scène de visualisation.

8. Dispositif de mesure de température de couleur de balance des blancs détachable (8), comprenant un filtre de balance des blancs de type à tube, une enveloppe externe, un capteur de température de couleur (81) monté dans ladite enveloppe externe, un circuit sans fil (82) et une batterie (83) qui sont montés dans le dispositif de mesure de température de couleur de balance des blancs (8), qui est monté sur un trépied (84), pour mesurer la valeur de balance des blancs moyenne de la scène et transmettre la valeur de balance des blancs moyenne mesurée à une unité centrale de traitement d'un appareil photographique (2), d'une caméra vidéo, d'un téléphone intelligent (3) ou d'une tablette électronique (4) en vue d'un traitement par l'intermédiaire d'un traitement arithmétique de balance des blancs,
le filtre de balance des blancs de type à tube comprenant une unité de balance des blancs (1), ladite unité de balance des blancs (1) comprenant un tube (11) et un composant de balance des blancs monté de manière axialement ajustable dans ledit tube (11), ledit tube (11) étant préparé à partir d'un matériau opaque et maintenu dans ladite enveloppe externe, et le composant de balance des blancs étant un filtre blanc laiteux ou gris (12),
le dispositif de mesure de température de couleur de balance des blancs (8) étant **caractérisé par le fait que** le filtre blanc laiteux ou gris (12) a un rebord annulaire blanc laiteux ou gris (121) s'étendant axialement à partir de la périphérie de celui-ci, et monté dans ledit tube (11) et mobile axialement par rapport audit tube (11) entre une position étendue et une position entièrement reçue, ledit rebord annulaire blanc laiteux ou gris (121) étant entièrement reçu dans ledit tube (11) et protégé par ledit tube opaque (11) vis-à-vis du rayonnement de lumière vive ou de lumière réfléchie lorsque ledit composant de balance des blancs est dans ladite position entièrement reçue, permettant à l'unité centrale de traitement d'obtenir une valeur de balance des blancs précise.
